# EUROPÄISCHE PATENTANMELDUNG

(11) **EP 0 890 491 A2**
(43) Veröffentlichungstag der Anmeldung: **13.01.1999**
(21) Anmeldenummer: 98112551.1
(22) Anmeldetag: 07.07.1998
(51) Int. Cl.: B60T 7/04

(54) **Fussfeststellbremse eines landwirtschaftlichen Fahrzeuges**

(30) Priorität: 08.07.1997 DE 19729050
(71) Anmelder: SAME DEUTZ-FAHR S.P.A., 24047 Treviglio (Bergamo) (IT)
(72) Erfinder: Nenno, Horst-Josef, 53909 Zülpich-Bürvenich (DE)
(74) Vertreter: Quinterno, Giuseppe

(57) **Zusammenfassung**

Entriegelungsvorrichtung für eine feststellbare Bremse eines Fahrzeuges, insbesondere eine Fußfeststellbremse eines landwirtschaftlichen Fahrzeuges, wobei die Entriegelungsvorrichtung mit einer Rastvorrichtung der Bremse verbunden ist und die Rastvorrichtung nach Betätigen der Entriegelungsvorrichtung lösbar ist, wobei erfindungsgemäß vorgesehen ist, daß die Entriegelungsvorrichtung Sicherungsmittel aufweist, wobei nach Betätigung der Sicherungsmittel und der Entriegelungsvorrichtung die Rastvorrichtung lösbar ist.

## Beschreibung

Die Erfindung betrifft eine Entriegelungsvorrichtung für eine feststellbare Bremse eines Fahrzeuges, insbesondere eine Fußfeststellbremse eines landwirtschaftlichen Fahrzeuges, gemäß den Merkmalen des Oberbegriffes des Patentanspruches 1.

Feststellbare Bremsen, die neben den Betriebsbremsen in Fahrzeugen existieren, sind bekannt. Bei Personenkraftwagen handelt es sich in der Regel um einen neben dem Fahrer angeordneten Griff, der hochgezogen werden kann und damit die Bremse zum Parken des Personenkraftwagens feststellt. Die Bremse weist eine Rastvorrichtung auf, die mittels einer Entriegelungsvorrichtung lösbar ist, um die Bremse selber zu lösen.

Ebenso sind insbesondere bei Personenkraftwagen sogenannte Fußfeststellbremsen bekannt, bei der zur Betätigung der Bremse ein Fußpedal getreten werden muß und im Cockpit-Bereich eine Entriegelungsvorrichtung in Form eines Zughebels vorhanden ist, wobei mittels des Zughebels die festgestellte Bremse gelöst werden kann.

Diese Bremsen mit den dazugehörigen Rast- und Entriegelungsvorrichtungen haben sich in der Praxis bewährt und arbeiten zuverlässig. Unter Sicherheitsaspekten weisen diese Vorrichtungen jedoch einen gravierenden Nachteil auf. Wird die Entriegelungsvorrichtung beabsichtigt (ohne losfahren zu wollen) oder unbeabsichtigt von einer Bedienperson oder mitfahrenden Personen (insbesondere Kinder) des Fahrzeuges bedient, führt das Fahrzeug eine Eigenbewegung aus (die besonders stark ist, wenn sich das Fahrzeug in Hanglage befindet), die nicht nur zur Beschädigungen am Fahrzeug selber oder an der Umgebung führen kann, sondern auch ein großes Sicherheitsrisiko für die Insassen des Fahrzeuges und auch für Personen in der näheren Umgebung des Fahrzeuges darstellt.

Der Erfindung liegt daher die Aufgabe zugrunde, eine Entriegelungsvorrichtung für eine feststellbare Bremse eines Fahrzeuges bereitzustellen, die unter Sicherheitsaspekten eine insbesondere unbeabsichtigte Betätigung der Bremse, insbesondere ein Lösen, verhindert.

Diese Aufgabe ist durch die Merkmale des Patentanspruches 1 gelöst.

Durch die Sicherungsmittel aufweisende Entriegelungsvorrichtung, wobei erst nach Betätigung der Sicherungsmittel und der Entriegelungsvorrichtung die Rastvorrichtung lösbar ist, ist der Vorteil gegeben, daß zunächst ein beabsichtigtes oder unbeabsichtigtes erstmaliges Betätigen der Entriegelungsvorrichtung nicht zur Lösung der Rastvorrichtung führt. Erst wenn zusätzlich die Sicherungsmittel betätigt worden sind und anschließend oder gleichzeitig die Entriegelungsvorrichtung betätigt wird, kann die Rastvorrichtung gelöst werden, so daß auch die Bremse gelöst wird und damit das Fahrzeug freigegeben wird. Damit ist sichergestellt, daß zum Beispiel ein unbeaufsichtigtes Betätigen der Entriegelungsvorrichtung durch ein Kind im Fahrzeug nicht zu einer Gefahrensituation führen kann. Als Fahrzeug kommen insbesondere Personenkraftwagen in Betracht, wobei weiterhin die erfindungsgemäße Entriegelungsvorrichtung ebenso bei Nutzfahrzeugen sowie land- oder bauwirtschaftlichen Fahrzeugen ebenfalls Anwendung findet.

In Weiterbildung der Erfindung bilden die Entriegelungsvorrichtung und die Sicherheitsmittel eine Baueinheit. Dies hat zum einen den Vorteil, daß die Baueinheit vormontiert werden kann und zum anderen den Vorteil, daß die Baueinheit, insbesondere ergonomisch ausgeformt, im Fahrzeug (insbesondere im Umfeld des Fabrerarbeitsplatzes) angeordnet werden kann.

In Weiterbildung der Erfindung führt ohne Betätigung der Sicherheitsmittel die Entriegelungsvorrichtung in Bezug auf die Rastvorrichtung einen Leerhub aus, wobei erst nach Betätigung der Sicherheitsmittel eine Wirkverbindung zwischen der Entriegelungsvorrichtung und der Rastvorrichtung herstellbar ist. Dies hat den Vorteil, daß bei einem unbefugten oder unbeabsichtigten Betätigen der Entriegelungsvorrichtung der Leerhub kräftefrei ausgeführt werden kann, wohingegen auch ein Sperren der Entriegelungsvorrichtung denkbar ist. Der Leerhub ist in diesem Fall von besonderem Vorteil, da in Abhängigkeit des Kraftaufwandes bei einer gesperrten Entriegelungsvorrichtung diese Sperre unter Umständen überwindbar wäre. Eine Sperre ist aber trotzdem nicht ausgeschlossen. Denkbar ist auch eine Ausgestaltung der Sicherungsmittel derart, daß beim erstmaligen Betätigen der Entriegelungsvorrichtung ein Leerhub ausgeführt wird und erst beim nochmaligen Betätigen (Doppelhub) die Bremse lösbar ist.

In Weiterbildung der Erfindung weist die Entriegelungsvorrichtung einen nach Betätigung der Sicherungsmittel eine Linear- oder Schwenkbewegung ausführenden Betätigungshebel auf. So sind verschiedene konstruktive Bewegungsformen angegeben, um die Entriegelungsvorrichtung zu betätigen. Hier kommen insbesondere ein Drücken oder Ziehen am Betätigungshebel oder auch eine Dreh- oder Schwenkbewegung in Betracht. In vorteilhafter Weise wird eine solche Bewegung gewählt, die den Bauraumverhältnissen im Fahrerarbeitsplatzbereich und den ergonomischen Gegebenheiten angepaßt ist.

In Weiterbildung der Erfindung ist der Betätigungshebel schwenkbar an einem Rahmen oder im Cockpit-Bereich des Fahrzeuges angeordnet. Eine solche Anordnung stellt eine bevorzugte Anordnung dar, da zum Lösen der Rastvorrichtung mittels des Betätigungshebels eine Schwenkbewegung von der Bedienperson des Fahrzeuges besonders einfach ausgeführt werden kann.

In Weiterbildung der Erfindung ist das Sicherheitsmittel ein im Betätigungshebel linear bewegbar gelagerter Betätigungsknopf, der nach seiner Betätigung eine Wirkverbindung zwischen der Entriegelungsvorrichtung und der Rastvorrichtung herstellt. Der linear bewegbar gelagerte Betätigungsknopf hat den Vorteil, daß mit einer einzigen Handbewegung sowohl der Betätigungsknopf als auch der Betätigungshebel bedient werden können. Somit bilden Betätigungshebel und Betätigungsknopf und die dazugehörigen Bauelemente eine Baueinheit, die vormontierbar und vor allen Dingen von der Bedienperson des Fahrzeuges leicht, schnell und zuverlässig und ohne Erklärungsbedarf bedient werden kann und trotzdem wirksam Fehlbedienungen, insbesondere das unbeabsichtigte Betätigen, verhindert.

Ein bevorzugtes Ausführungsbeispiel, auf das der erfindungsgemäße Gedanke jedoch nicht beschränkt ist, ist in den weiteren Patentansprüchen, aus denen sich ebenso vorteilhafte Wirkungen ergeben, angegeben und wird im folgenden beschrieben und anhand der Figuren erläutert.

Es zeigen:
- Figur 1:: den prinzipiellen Aufbau einer Fußfeststellbremse,
- Figur 2:: Ausgestaltung einer erfindungsgemäßen Entriegelungsvorrichtung.

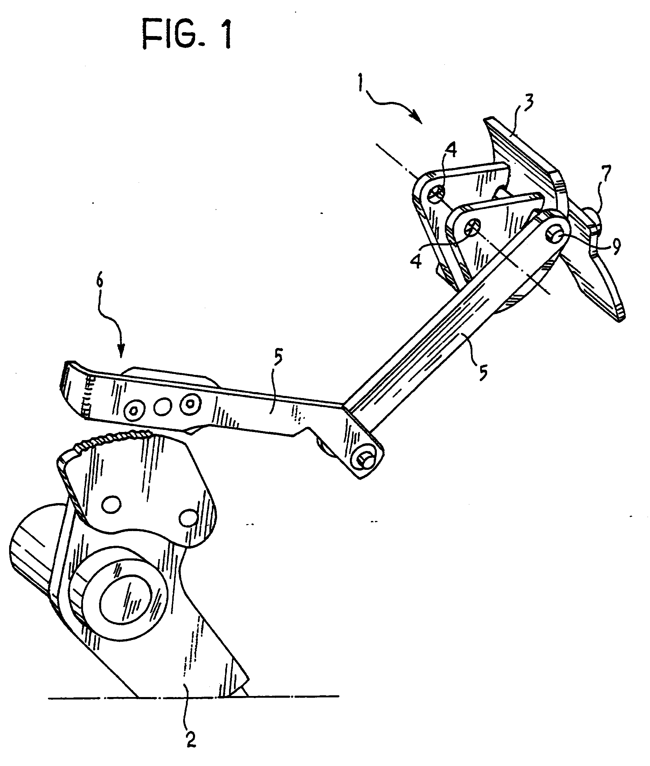

Figur 1 zeigt den prinzipiellen Aufbau einer Fußfeststellbremse eines Fahrzeuges, insbesondere eines landwirtschaftlichen Fahrzeuges, wie sie im Prinzip bekannt ist. Auf die Ausgestaltung der Bremse an sich (zum Beispiel Trommelbremse, Scheibenbremse oder weitere denkbare beziehungsweise bekannte Ausgestaltungen) kommt es hier nicht darauf an.

Mit der Bezugsziffer 1 ist eine Entriegelungsvorrichtung bezeichnet, die in Griffweite der Bedienperson (Fahrer) des Fahrzeuges angeordnet ist. Die Bezugsziffer 2 deutet eine Fußfeststellbremse an, wobei der in Figur 1 gezeigte Hebel in Richtung eines Fußpedales zeigt und gleichzeitig mit der Bremse an sich verbunden ist (dies ist in Figur 1 nicht dargestellt). Die Entriegelungsvorrichtung 1 weist einen Betätigungshebel 3 auf, wobei der Betätigungshebel 3 über Drehpunkte 4 an einem Rahmen oder im Cockpit-Bereich des Fahrzeuges schwenkbar angeordnet ist. Der Betätigungshebel 3 ist über Verbindungselemente 5 mit einer Rastvorrichtung 6 verbunden, wobei nach Betätigung der Füßfeststellbremse 2 (Treten des Fußpedales) der nicht näher bezeichnete Klinkenhebel des linken Verbindungselementes 5 in einem Zahnsegment, das ebenfalls nicht näher bezeichnet ist, einrastet und somit die Fußfeststellbremse arretiert. Zum Lösen derselben ist es erfindungsgemäß nun erforderlich, vor oder während der Betätigung der Entriegelungsvorrichtung einen Betätigungsknopf 7 - bei dieser Ausgestaltung - zu drücken, der es gestattet, die Schwenkbewegung der Entriegelungsvorrichtung 1 über die Verbindungselemente 5 auf die Rastvorrichtung 6 zu übertragen, damit diese ausrastet und die Fußfeststellbremse freigibt. Es ist denkbar, daß durch die Bewegung (insbesondere das Drücken) des Betätigungsknopfes 7 eine Wirkverbindung zwischen dem Betätigungshebel 3 und den Verbindungselementen 5- mittels Form- oder Kraftschluß hergestellt wird.

Die Wirkungsweise und Ausgestaltung der in Figur 1 gezeigten Entriegelungsvorrichtung 1 ist in der nächsten Figur erläutert.

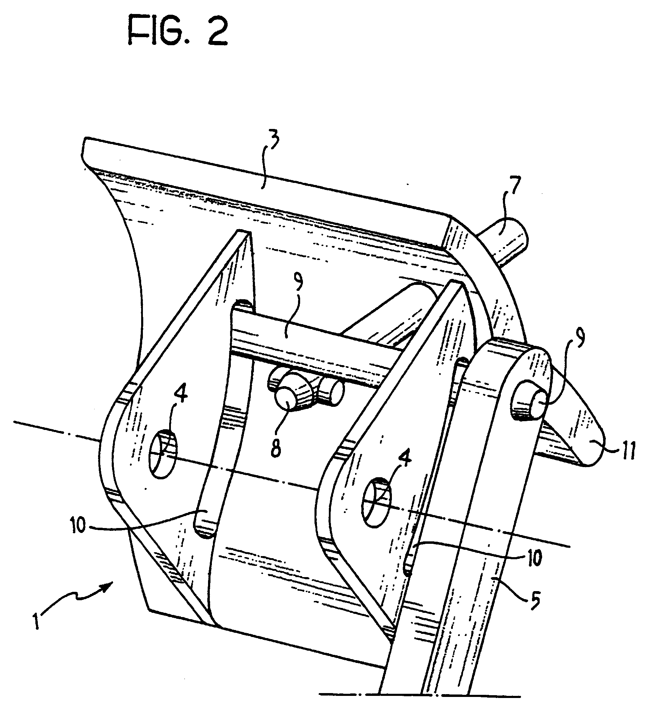

Figur 2 zeigt die Ausgestaltung der Entriegelungsvorrichtung 1, wobei wiederum der Betätigungshebel 3 erkennbar ist, der beispielsweise als Kunststoffteil mit den integrierten Drehpunkten 4 versehen ist. In dem Betätigungshebel 3, insbesondere in etwa mittig, ist zur Bedienperson des Fahrzeuges hin gewandt der Betätigungsknopf 7 zu sehen, wobei auf der dem Fahrer abgewandten Seite des Betätigungsknopfes 7 dieser einen Stift 8 aufweist. In Figur 2 ist gezeigt, daß dieser Stift 8 in etwa an seinem Ende einen nicht näher bezeichneten Quersplint aufweist, der den Zweck hat, eine Druckfeder zwischen diesem Quersplint und der Innenseite des Betätigungshebels 3 zu fixieren, wobei diese Druckfeder bewirkt, daß der Stift 8 und damit der Betätigungsknopf 7 sich ohne Krafteinwirkung in der Leerhub-Position befindet (ein Lösen der Bremse ist damit nicht möglich) und nach Kraftbeaufschlagung (Drücken) des Betätigungsknopfes 7 die Wirkverbindung zwischen dem Betätigungshebel 3 und der Rastvorrichtung 6 herstellt. Wie dies im einzelnen in Figur 2 geschieht, wird im folgenden erläutert:

An dem dem Betätigungshebel 3 zugewandten Verbindungselement 5 ist eine Querstange 9 in etwa im rechten Winkel zu dem Verbindungselement 5 angeordnet, wobei das Verbindungselement 5 seitlich des Betätigungshebels 3 angeordnet ist. Es handelt sich somit um eine asymmetrische Konstruktion. Denkbar ist hier auch, das Verbindungselement in etwa in der Mitte der Querstange 9 zu befestigen. Die Querstange 9 ist in Langlöchern 10 des Betätigungshebels 3 führbar gelagert, so daß dann, wenn sich Betätigungsknopf 7 beziehungsweise Stift 8 in der Leerhub-Position befinden, beim Verschwenken des Betätigungshebels 3 um die Drehpunkte 4 die Querstange 9 in ihrer Position verbleibt, so daß die Langlöcher 10 um die Querstange 9 herum die Schwenkbewegung ausführen. Erst wenn ein Lösen der Bremse von der Bedienperson des Fahrzeuges gewollt ist, muß der Betätigungsknopf 7 gedrückt werden, was eine Bewegung des Stiftes 8 in Richtung der Querstange 9 zur Folge hat. Wird nun der Betätigungshebel 3 um die Drehpunkte 4 herum verschwenkt, kommen Stift 8 und Querstange 9 in Anlage und über die Verbindungselemente 5 wird die Rastvorrichtung 6 betätigt und die Bremse gelöst. In Figur 2 ist gezeigt, daß nach Betätigung des Betätigungsknopfes 7 der Stift 8 in Anlage mit der Querstange 9 gelangt. Hier ist es auch denkbar, daß anstelle der Querstange 9 ein in etwa flach ausgebildetes Verbindungselement 5 vorgesehen ist, das eine Bohrung aufweist, in die der Stift 8 nach Betätigen des Betätigungsknopfes 7 hineingeführt werden kann. Erst wenn der Stift 8 in die Bohrung eingeführt ist, ist ein Lösen der Rastvorrichtung 6 und damit der Bremse möglich. Denkbar ist hier auch ein Reibschluß, bei der der Stift 8 oder dergleichen auf ein entsprechend ausgebildetes Verbindungselement 5 drückt, so daß bei Festhalten des Betätigungsknopfes 7 der Reibschluß gegeben ist und damit die Schwenkbewegung des Betätigungshebels 3 auf die Rastvorrichtung 6 übertragen werden kann. Der Betätigungsknopf 7 und der Stift 8 bilden ein einstückiges Bauteil oder ein Bauteil, das aus den Komponenten 7 und 8 zusammensetzbar ist. Der Betätigungsknopf 7 ist in vorteilhafter Weise in Längsrichtung zur Verschleißminderung in dem Betätigungshebel 3 gelagert. Während in Figur 2 eine Schwenkbewegung des Betätigungshebels 3 dargestellt ist, sind selbstverständlich auch Zug- oder Druckbewegungen oder eine Kombination von diesen möglich. Bei den Verbindungselementen 5 kann es sich um starre Verbindungselemente, aber auch um flexible Verbindungselemente (wie beispielsweise Bowdenzüge, Gliederketten, Bänder oder dergleichen) handeln. Mit der Bezugsziffer 11 ist in Figur 1 noch eine Lasche unterhalb (denkbar auch oberhalb) des Betätigungsknopfes 7 bezeichnet, wobei diese Lasche 11 der Bediensicherheit förderlich ist, da somit mit einer Hand beispielsweise durch Untergreifen der Lasche 11 mittels des Zeigefingers der Daumen eine Druckbewegung auf den Betätigungsknopf 7 ausführen kann und gleichzeitig über die Lasche 11 zuverlässig die Schwenkbewegung des Betätigungshebels 3 ausgeführt werden kann.

## Patentansprüche

1. Entriegelungsvorrichtung (1) für eine feststellbare Bremse eines Fahrzeuges, insbesondere eine Fußfeststellbremse (2) eines landwirtschaftlichen Fahrzeuges, wobei die Entriegelungsvorrichtung (1) mit einer Rastvorrichtung (6) der Bremse verbunden ist und die Rastvorrichtung (6) nach Betätigen der Entriegelungsvorrichtung (1) lösbar ist, *dadurch gekennzeichnet,* daß die Entriegelungsvorrichtung (1) Sicherungsmittel aufweist, wobei nach Betätigung der Sicherungsmittel und der Entriegelungsvorrichtung (1) die Rastvorrichtung (6) lösbar ist.

2. Entriegelungsvorrichtung (1) nach Anspruch 1, *dadurch gekennzeichnet,* daß die Entriegelungsvorrichtung (1) und die Sicherheitsmittel eine Baueinheit bilden.

3. Entriegelungsvorrichtung (1) nach Anspruch 1 oder 2, *dadurch gekennzeichnet*, daß ohne Betätigung der Sicherheitsmittel die Entriegelungsvorrichtung (1) in Bezug auf die Rastvorrichtung (6) einen Leerhub ausführt und erst nach Betätigung der Sicherheitsmittel eine Wirkverbindung zwischen der Entriegelungsvorrichtung (1) und der Rastvorrichtung (6) herstellbar ist.

4. Entriegelungsvorrichtung (1) nach Anspruch 1, 2 oder 3, *dadurch gekennzeichnet,* daß die Entriegelungsvorrichtung (1) einen nach Betätigung eine Linear- oder Schwenkbewegung ausführenden Betätigungshebel (3) aufweist.

5. Entriegelungsvorrichtung (1) nach Anspruch 4, *dadurch gekennzeichnet,* daß der Betätigungshebel (3) schwenkbar an einem Rahmen oder im Cockpitbereich des Fahrzeuges angeordnet ist.

6. Entriegelungsvorrichtung (1) nach Anspruch 5, *dadurch gekennzeichnet*, daß das Sicherheitsmittel ein im Betätigungshebel (3) linear bewegbar gelagerter Betätigungsknopf (7) ist, der nach seiner Betätigung eine Wirkverbindung zwischen der Entriegelungsvorrichtung (1) und der Rastvorrichtung (6) herstellt.

7. Entriegelungsvorrichtung (1) nach Anspruch 6, *dadurch gekennzeichnet*, daß der Betätigungsknopf (7) gegenüber dem Betätigungshebel (3) kraftbeaufschlagt ist.

8. Entriegelungsvorrichtung (1) nach einem der vorhergehenden Ansprüche, dadurch gekennzeichnet, daß an einem Ende eines Verbindungselementes (5) der Rastvorrichtung (6) eine Querstange (9) angeordnet ist, die in Langlöchern (10) des Betätigungshebels (3) bewegbar und von einem Stift (8) des Betätigungsknopfes (7) festsetzbar ist.

9. Entriegelungsvorrichtung (1) nach einem der vorhergehenden Ansprüche, *dadurch gekennzeichnet,* daß die Wirkverbindung ein Form- oder Kraftschluß ist.
